# EUROPÄISCHE PATENTSCHRIFT

(11) **EP 2 595 835 B1**
(45) Veröffentlichungstag und Bekanntmachung des Hinweises auf die Patenterteilung: **18.10.2017**
(21) Anmeldenummer: 11728787.0
(22) Anmeldetag: 30.06.2011
(51) Int. Cl.: B60L 15/20

(54) **VERFAHREN ZUM BETREIBEN EINES KRAFTFAHRZEUGS MIT ZWEI ELEKTRISCHEN ANTRIEBEN, SOWIE KRAFTFAHRZEUG**
METHOD FOR OPERATING A MOTOR VEHICLE HAVING TWO ELECTRIC DRIVES, AND A MOTOR VEHICLE
PROCÉDÉ POUR FAIRE FONCTIONNER UN VÉHICULE À MOTEUR COMPORTANT DEUX ENTRAÎNEMENTS ÉLECTRIQUES ET VÉHICULE À MOTEUR

(30) Priorität: 21.07.2010 DE 102010031731
(43) Veröffentlichungstag der Anmeldung: 29.05.2013
(73) Patentinhaber: Audi AG, 85045 Ingolstadt (DE)
(72) Erfinder: ISGEN, Dirk, 85080 Gaimersheim (DE); KOCH, Tilo, 85057 Ingolstadt (DE); KUNSCH, Peter, 85123 Karlskron (DE); MEITINGER, Karl-Heinz, 81667 München (DE); WEIN, Michael, 92358 Seubersdorf (DE); PFAU, Jörg, 85051 Ingolstadt (DE); LÖHR, Thomas, 92339 Beilngries (DE)
(86) Internationale Anmeldenummer: PCT/EP2011/003246
(87) Internationale Veröffentlichungsnummer: WO 2012/022392

(56) Entgegenhaltungen:
- DE-A- 4 011 291
- DE-A1-102007 017 821

## Beschreibung

Die Erfindung betrifft ein Verfahren zum Betreiben eines Kraftfahrzeugs mit mindestens zwei elektrischen Antrieben, wobei jeder der Antriebe auf ein anderes Rad wirkt, von denen zwei Räder an entgegengesetzten Seiten, also linker und rechter Fahrzeugseite, des Kraftfahrzeugs angeordnet sind. Die Erfindung betrifft auch ein Kraftfahrzeug mit dieser Eigenschaft. Den elektrischen Antrieben sollen hierbei jeweilige Antriebssteuereinrichtungen zugeordnet sein, die man herkömmlicherweise auch als "Leistungselektronik" bezeichnet, es handelt sich also um eine elektronische Schaltung mit einem Mikroprozessor. Die Eigenschaft der Antriebssteuereinrichtung beziehungsweise der Leistungselektronik ist es, dass sie unmittelbar die Beaufschlagung des jeweiligen elektrischen Antriebs mit Strom bewirkt. In dem Kraftfahrzeug soll ferner eine zentrale Steuereinrichtung den Antriebssteuereinrichtungen übergeordnet sein.

In Kraftfahrzeugen gibt es heutzutage vielfältige Regelsysteme, durch die der Fahrkomfort und die Sicherheit erhöht werden.

Bekannt ist es, in einem Kraftfahrzeug eine Antriebsschlupfregelung vorzusehen: Der Schlupf an den einzelnen Rädern des Kraftfahrzeugs wird erfasst, und unter Zuhilfenahme von Aktoren, insbesondere des Motors oder einer Bremse, wird bewirkt, dass sich der Schlupf auf einen bestimmten Wert einstellt, der in Abhängigkeit von verschiedenen Parametern festgelegt wird. Durch die Antriebsschlupfregelung wird ein Durchdrehen eines Rades verhindert und daher für erhöhte Sicherheit beim Fahren gesorgt.

Durch das so genannte elektronische Stabilitätsprogramm, eine Regelung, die für die Stabilität des Kraftfahrzeugs als Ganzem sorgt, wird ein nicht gewünschtes Gieren des Kraftfahrzeugs unterbunden.

Bisherige Konzepte sehen vor, dass sämtliche Arten von Regelung unter der Steuerung der zentralen Steuereinrichtung erfolgen. Werden diese Befehle an Aktoren bzw. die Elektromotoren über ein Datenbussystem abgesetzt, ist selbiges dann aber stark belastet, wenn nicht sogar überlastet. Weiter hat die Kommunikation jedes Mal einen Zeitverzug zur Folge.

Die DE 10 2007 017 821 A1 zeigt einen Lastkraftwagen mit einer Mehrzahl von Rädern, welche über jeweilige Einzelradantriebe angetrieben werden. Der Lastkraftwagen umfasst eine Regelvorrichtung zur Regelung der Drehzahl und/oder des Drehmoments der Einzelradantriebe. Die Regelvorrichtung umfasst jeweils einen separaten Reglerstrang für jeden der Einzelradantriebe, wobei die Regelvorrichtung ein von einem Fahrer des Lastkraftwagens vorgegebenes Moment auf die jeweiligen Regelstränge aufteilt. Jeder Regelstrang umfasst dabei einen Radschlupfregler, der das den jeweiligen Einzelradantrieben zugewiesene Moment in Abhängigkeit eines jeweiligen Radschlupfs korrigiert.

Die DE 40 11 291 A1 zeigt ein Elektrofahrzeug mit einer Mehrzahl von Rädern, welche über jeweilige Elektromotoren angetrieben sind. Jedem der Elektromotoren ist jeweils eine eigene Motorsteuerung zum Vorgegeben einer momentanen Soll-Leistung und/oder Soll-Drehzahl zugeordnet. Des Weiteren umfasst das Elektrofahrzeug eine übergeordnete Zentralsteuerung, welche die Elektromotoren über die Motorsteuerungen zur Antischlupfregelegung und/oder zur Erzeugung eines Giermoments steuert.

Es ist Aufgabe der Erfindung, einen Weg aufzuzeigen, wie Regelungen in einem Kraftfahrzeug der genannten Art mit (zumindest) zwei elektrischen Antrieben besonders effektiv erfolgen können.

Die Aufgabe wird durch ein Verfahren mit den Merkmalen gemäß Patentanspruch 1 gelöst, und durch ein Kraftfahrzeug mit den Merkmalen des Patentanspruchs 3 gelöst.

Bei dem erfindungsgemäßen Verfahren steuert somit im Rahmen einer ersten Art von Regelung zumindest eine Antriebssteuereinrichtungen den zugehörigen Antrieb an. Im Rahmen einer zweiten Art von Regelung steuert hingegen die zentralen Steuereinrichtung mehrere Antriebe auf einmal an.

Durch die Erfindung wird eine Aufteilung der Aufgaben der einzelnen Steuereinrichtungen vorgenommen.

Insbesondere können die typischen Antriebssteuereinrichtungen in ihrer Ausführungsform als Leistungselektroniken sehr schnell rechnen und sehr schnell für eine Umsetzung durch Beaufschlagung der Antriebe mit elektrischem Strom sorgen. Den Antriebssteuereinrichtungen kann man daher solche Aufgaben zuweisen, bei denen schnelle Umsetzung erforderlich oder wünschenswert ist.

Beispielsweise ist die Antriebsschlupfregelung bei elektrischen Antrieben besonders effektiv und schnell ausführbar, wenn unmittelbar die Elektromotoren angesteuert werden, wenn also radindividuell angesteuert wird. Somit wird erfindungsgemäß durch die erste Art von Regelung eine Antriebsschlupfregelung durchgeführt, also wird ein auftretender Schlupf an dem jeweiligen Rad zum Zwecke einer optimalen Traktion auf einen vorbestimmten Wert geregelt.

Der zentralen Steuereinrichtung sind hingegen solche Aufgaben erfindungsgemäß zugewiesen, die mehrere Räder übergreifende Eingriffe mit sich bringen. Dies gilt für das so genannte elektronische Stabilitätsprogramm, wenn also durch die zweite Art von Regelung für die Stabilität des Kraftfahrzeugs als Ganzem gesorgt wird. Eingriffe erfolgen hierbei in Abhängigkeit von einer Geschwindigkeit des Kraftfahrzeugs und/oder einer Giergeschwindigkeit (Gierrate) des Kraftfahrzeugs und/oder von einer Längsbeschleunigung und/oder einer Querbeschleunigung und/oder einem Schwimmwinkel des Kraftfahrzeugs. Insbesondere in Abhängigkeit von einem an einer Lenkhandhabe eingestellten Lenkwinkel und in Abhängigkeit von der Längsgeschwindigkeit des Kraftfahrzeugs ergeben sich bestimmte Sollwerte für die Giergeschwindigkeit, die Längsbeschleunigung, die Querbeschleunigung und den Schwimmwinkel des Kraftfahrzeugs; sofern es eine Abweichung von diesen Sollwerten gibt, ist ein stabilisierender Regeleingriff erforderlich.

Klassische Regeleingriffe beinhalten, dass einzelne Räder aktiv gebremst werden oder das Antriebsmoment dort reduziert wird. Dies gilt insbesondere für die Antriebsschlupfregelung. Somit steuert jede Antriebssteuereinrichtung zumindest einen Antrieb derart an, dass das jeweilige Rad gebremst wird, indem dessen Antriebsleistung bzw. Antriebsmoment reduziert wird.

Das erfindungsgemäße Kraftfahrzeug setzt das erfindungsgemäße Verfahren um. Die zum Verfahren geschilderten Vorteile gelten entsprechend für das erfindungsgemäße Kraftfahrzeug.

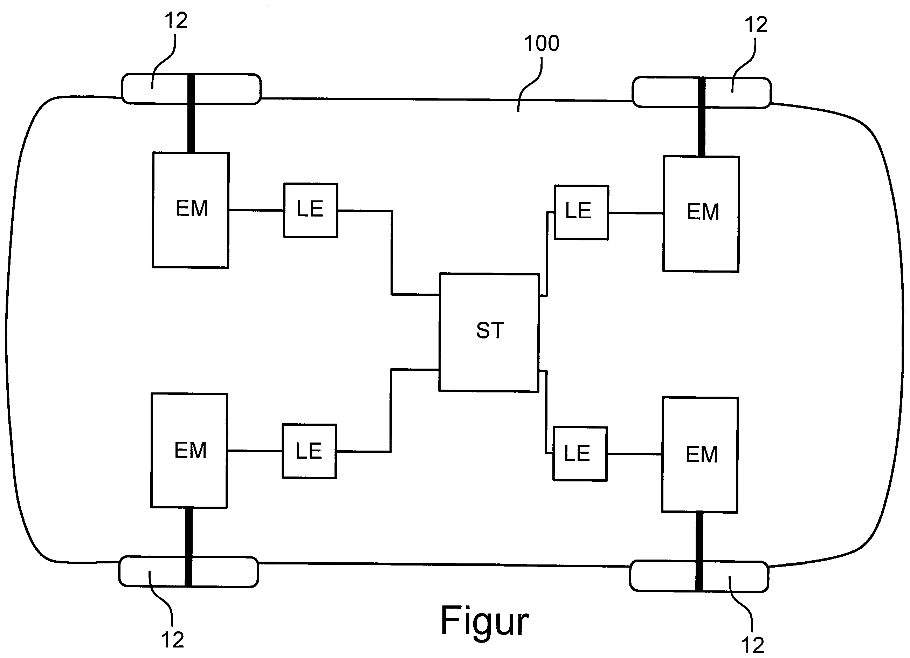

Nachfolgend wird eine bevorzugte Ausführungsform der Erfindung unter Bezug auf die Zeichnung beschrieben, in der die
- einzige Figur: eine schematische Draufsicht auf ein erfindungsgemäßes Kraftfahrzeug mit den zugehörigen Komponenten veranschaulicht.

In einem Kraftfahrzeug 100 seien vier elektrische Antriebe, Elektromotoren EM, bereitgestellt, von denen jeder auf ein gesondertes Rad 12 des Kraftfahrzeugs arbeitet. Insbesondere arbeiten zwei der elektrischen Antriebe auf an einander entgegengesetzten Seiten des Kraftfahrzeugs 12 angeordnete Räder.

Die elektrischen Antriebe werden von so genannten Leistungselektroniken LE, die als Antriebssteuereinrichtung fungieren, angesteuert und gleichzeitig mit Strom aus einer in der Figur nicht gezeigten Stromquelle beaufschlagt.

Den Leistungselektroniken LE übergeordnet ist ein zentrales Steuergerät ST. Dieses kann Steuerbefehle an alle Leistungselektroniken LE absetzen, die daraufhin diese Steuerbefehle umsetzen und die Elektromotoren EM entsprechend beaufschlagen.

Durch die Leistungselektroniken LE wird eine Antriebsschlupfregelung verwirklicht. Mit geeigneten Sensoren, die in der Figur der Übersichtlichkeit halber nicht dargestellt sind, werden Messgrößen erfasst, die als Eingangsgrößen zur Bestimmung des Schlupfes des jeweiligen Rades 12 dienen. Die Ermittlung des Schlupfes aus den Messgrößen kann im zentralen Steuergerät ST unter Bereitstellung mittels Datenbus oder in den Leistungselektroniken LE direkt erfolgen. Die Leistungselektronik LE überwacht diesen Schlupf und bewirkt durch Regeleingriffe, bei denen die Elektromotoren EM angesteuert werden, dass der Schlupf auf einen bestimmten Wert geregelt wird, entweder soll der Schlupf verschwinden oder auf einen vorgegebenen Wert eingeregelt werden. Besonders vorteilhaft ist es, Regelalgorithmen in den Leistungselektronik zu integrieren, die neben dem Schlupf vor allem die Raddrehzahl direkt und deren Gradienten als Eingangsgrößen verwenden. Die Antriebsschlupfregelung für jedes der vier Räder 12 wird somit durch die zugehörige Leistungselektronik LE bewirkt.

Die zentrale Steuereinrichtung hat die Aufgabe, für die Stabilität des Kraftfahrzeugs 100 zu sorgen. Zu diesem Zwecke wertet sie von (in der Figur nicht gezeigten) Sensoren Messwerte aus, zum Beispiel erfasst sie die Gierrate, Querbeschleunigung, Längsbeschleunigung oder einen Schwimmwinkel des Kraftfahrzeugs 100 und setzt sie in Bezug zu einem Lenkwinkel an einer (in der Figur nicht gezeigten) Lenkhandhabe des Kraftfahrzeugs und zur Geschwindigkeit des Kraftfahrzeugs. Entspricht die Giergeschwindigkeit, Querbeschleunigung, Längsbeschleunigung oder der Schwimmwinkel nicht dem erwarteten Wert, so wird ein Regeleingriff vorgesehen, in dem zumindest einer der Elektromotoren EM über die zugehörige Leistungselektronik LE angesteuert wird.

Bei dem Kraftfahrzeug 100 ist eine Aufgabenverteilung realisiert, wobei die Schlupfregelung durch die Leistungselektroniken LE realisiert wird, wohingegen für die Stabilität des Kraftfahrzeugs durch das zentrale Steuergerät ST gesorgt ist.

Andere Arten der Regelung können hinzutreten. Immer dann, wenn eine schnelle Regelung wünschenswert ist, insbesondere an einem einzelnen Rad Eingriffe möglich sind, kann diese Aufgabe der Leistungselektronik LE überlassen werden. Sofern mehrere Räder übergreifende Mechanismen ins Spiel kommen, so überlässt man die Regelung der zentralen Steuereinrichtung.

## Patentansprüche

1. Verfahren zum Betreiben eines Kraftfahrzeugs (100) mit zumindest zwei elektrischen Antrieben (EM), die auf Räder (12) an entgegengesetzten Seiten des Kraftfahrzeugs arbeiten, wobei jedem elektrischen Antrieb (EM) eine Antriebssteuereinrichtung (LE) zugeordnet ist, durch die unmittelbar die Beaufschlagung des jeweiligen elektrischen Antriebs mit Strom bewirkt wird, wobei eine zentrale Steuereinrichtung (ST) den Antriebssteuereinrichtungen (LE) übergeordnet ist, und dass im Rahmen einer ersten Art von Regelung zumindest eine Antriebssteuereinrichtung (LE) den zugeordneten Antrieb (EM) ansteuert, wobei durch die erste Art von Regelung ein auftretender Schlupf an dem jeweiligen Rad (12) zum Zwecke einer optimalen Traktion auf einen vorbestimmten Wert geregelt wird, **dadurch gekennzeichnet, dass** im Rahmen einer zweiten Art von Regelung die zentrale Steuereinrichtung (ST) mehrere Antriebe (EM) über deren zugeordnete Antriebssteuereinrichtung auf einmal ansteuert, wobei durch die zweite Art von Regelung für die Stabilität des Kraftfahrzeugs (100) im Ganzen in Abhängigkeit von einer Geschwindigkeit des Kraftfahrzeugs und/oder einem an einer Lenkhandhabe des Kraftfahrzeugs eingestellten Lenkwinkel und/oder von einer Giergeschwindigkeit des Kraftfahrzeugs und/oder von einer Längsbeschleunigung des Kraftfahrzeugs und/oder von einer Querbeschleunigung und/oder von einem Schwimmwinkel des Kraftfahrzeugs gesorgt wird.

2. Verfahren nach Anspruch 1,
**dadurch gekennzeichnet, dass**
durch jede Antriebssteuereinrichtung im Rahmen der ersten Regelung ein Antrieb so angesteuert wird, dass das jeweilige Rad (12) mit gegenüber dem Zustand ohne Regeleingriff reduziertem und gegebenenfalls sogar zum Bremsen negativen Antriebsmoment angetrieben wird.

3. Kraftfahrzeug (100) mit zwei elektrischen Antrieben (EM), die auf Räder an entgegengesetzten Seiten des Kraftfahrzeugs arbeiten, und mit den elektrischen Antrieben zugeordneten Antriebssteuereinrichtungen (LE), durch die unmittelbar die Beaufschlagung des jeweiligen elektrischen Antriebs (EM) mit Strom bewirkbar ist, und mit einer zentralen Steuereinrichtung (ST), die den Antriebssteuereinrichtungen übergeordnet ist, und dass zumindest eine Antriebssteuereinrichtung (LE) ausgelegt ist, eine erste Art von Regelung durchzuführen und hierbei zumindest einen Antrieb (EM) anzusteuern, wobei durch die erste Art von Regelung ein auftretender Schlupf an dem jeweiligen Rad (12) zum Zwecke einer optimalen Traktion auf einen vorbestimmten Wert geregelt wird, **dadurch gekennzeichnet, dass** die zentrale Steuereinrichtung (ST) ausgelegt ist, im Rahmen einer zweiten Art von Regelung mehrere Antriebe (EM) über deren jeweilige Antriebssteuereinrichtung (LE) auf einmal anzusteuern, wobei durch die zweite Art von Regelung für die Stabilität des Kraftfahrzeugs (100) im Ganzen in Abhängigkeit von einer Geschwindigkeit des Kraftfahrzeugs und/oder einem an einer Lenkhandhabe des Kraftfahrzeugs eingestellten Lenkwinkel und/oder von einer Giergeschwindigkeit des Kraftfahrzeugs und/oder von einer Längsbeschleunigung des Kraftfahrzeugs und/oder von einer Querbeschleunigung und/oder von einem Schwimmwinkel des Kraftfahrzeugs gesorgt wird.

## Claims

1. Method for operating a motor vehicle (100) with at least two electric drives (EM), which operate on wheels (12) on opposite sides of the motor vehicle, wherein a drive control device (LE) is associated with each electric drive (EM), by means of which the respective electric drive is directly fed with electric current, wherein a central control device (ST) exerts a higher-level control on the drive control devices (LE), and that in the context of a first type of regulation at least one drive control device (LE) controls the associated drive (EM), wherein by means of the first type of regulation a slippage occurring on the respective wheel (12) is adjusted to a predetermined value for the purposes of an optimal traction, **characterised in that** in the context of a second type of regulation the central control device (ST) controls multiple drives (EM) all at once via their associated drive control device, wherein by means of the second type of regulation the stability of the motor vehicle (100) is ensured as a whole depending on a velocity of the motor vehicle and/or on a steering angle adjusted on a steering wheel of the motor vehicle and/or on a yaw velocity of the motor vehicle and/or on a longitudinal acceleration of the motor vehicle and/or on a transverse acceleration and/or on a side slip angle of the motor vehicle.

2. Method according to claim 1,
**characterised in that**
by means of each drive control device a drive is controlled in the context of the first regulation so that the respective wheel (12) is driven with a reduced and possibly even with a negative drive torque for braking, compared to the state without regulatory engagement.

3. Motor vehicle (100) with two electric drives (EM), which operate on wheels on opposite sides of the motor vehicle, and with drive control devices (LE) associated with the electric drives, by means of which the respective electric drive (EM) can directly be fed with current, and with a central control device (ST) that exerts a higher-level control on the drive control devices, and that at least one drive control device (LE) is designed to execute a first type of regulation and thereby to control at least one drive (EM), whereby by means of the first type of regulation any slippage occurring on the respective wheel (12) is regulated to a predetermined value for the purposes of an optimal traction, **characterised in that** the central control device (ST) is designed to control all at once in the context of a second type of regulation multiple drives (EM) via their respective drive control device (LE), wherein by means of the second type of regulation the stability of the motor vehicle (100) as a whole can be ensured depending on a velocity of the motor vehicle and/or on a steering angle adjusted by a steering wheel of the motor vehicle and/or on the yaw velocity of the motor vehicle and/or on a longitudinal acceleration of the motor vehicle and/or on a transverse acceleration and/or on a side slip angle of the motor vehicle.

## Revendications

1. Procédé pour faire fonctionner un véhicule automobile (100) avec au moins deux entraînements électriques (EM) qui agissent sur des roues (12) au niveau de côtés opposés du véhicule automobile,
dans lequel il est associé à chaque entraînement électrique (EM) un dispositif de commande d'entraînement (LE) par lequel est directement produite l'alimentation en courant de l'entraînement électrique respectif,
dans lequel un dispositif de commande central (ST) est supérieur hiérarchiquement aux dispositifs de commande d'entraînement (LE),
dans lequel, dans le cadre d'un premier type de régulation, au moins un dispositif de commande d'entraînement (LE) commande l'entraînement (EM) associé et
dans lequel, par le premier type de régulation, un glissement apparaissant au niveau de la roue (12) respective est régulé à une valeur prédéterminée en vue d'une traction optimale,
**caractérisé en ce que**, dans le cadre d'un deuxième type de régulation, le dispositif de commande central (ST) commande plusieurs entraînements (EM) à la fois par l'intermédiaire de leur dispositif de commande d'entraînement associé,
le deuxième type de régulation se chargeant globalement de la stabilité du véhicule automobile (100) en fonction d'une vitesse du véhicule automobile et/ou d'un angle de direction réglé au niveau d'une manette de direction du véhicule automobile et/ou d'une vitesse de lacet du véhicule automobile et/ou d'une accélération longitudinale du véhicule automobile et/ou d'une accélération transversale du véhicule automobile et/ou d'un angle de dérive du véhicule automobile.

2. Procédé selon la revendication 1, **caractérisé en ce que**, dans le cadre de la première régulation, un entraînement est commandé de telle sorte par chaque dispositif de commande d'entraînement que la roue (12) respective est entraînée avec un moment d'entraînement réduit par rapport à l'état sans intervention de régulation et même éventuellement avec un moment d'entraînement négatif en vue d'un freinage.

3. Véhicule automobile (100) avec deux entraînements électriques (EM) qui agissent sur des roues au niveau de côtés opposés du véhicule automobile, avec des dispositifs de commande d'entraînement (LE) qui sont associés aux entraînements électriques et par lesquels peut être directement produite l'alimentation en courant de l'entraînement électrique (EM) respectif et avec un dispositif de commande central (ST) qui est supérieur hiérarchiquement aux dispositifs de commande d'entraînement,
dans lequel au moins un dispositif de commande d'entraînement (LE) est conçu pour effectuer un premier type de régulation et pour commander ce faisant au moins un entraînement (EM),
dans lequel, par le premier type de régulation, un glissement apparaissant au niveau de la roue (12) respective est régulé à une valeur prédéterminée en vue d'une traction optimale,
**caractérisé en ce que** le dispositif de commande central (ST) est conçu pour, dans le cadre d'un deuxième type de régulation, commander plusieurs entraînements (EM) à la fois par l'intermédiaire de leur dispositif de commande d'entraînement (LE) respectif,
le deuxième type de régulation se chargeant globalement de la stabilité du véhicule automobile (100) en fonction d'une vitesse du véhicule automobile et/ou d'un angle de direction réglé au niveau d'une manette de direction du véhicule automobile et/ou d'une vitesse de lacet du véhicule automobile et/ou d'une accélération longitudinale du véhicule automobile et/ou d'une accélération transversale du véhicule automobile et/ou d'un angle de dérive du véhicule automobile.
